# FASCICULE DE BREVET EUROPEEN

(11) **EP 1 041 685 B1**
(45) Date de publication et mention de la délivrance du brevet: **14.06.2006**
(21) Numéro de dépôt: 00400810.8
(22) Date de dépôt: 23.03.2000
(51) Int. Cl.: H01R 43/045

(54) **Boîte distributrice pour accessoires de câblage, et chargeur correspondant**
Abgabevorrichtung für Zubehörteile von elektrischen Kabeln und Ladevorrichtung
Dispensing device for electrical cable accessories and loader

(30) Priorité: 31.03.1999 FR 9904010
(43) Date de publication de la demande: 04.10.2000
(73) Titulaire: LEGRAND, 87000 Limoges (FR); LEGRAND SNC, 87000 Limoges (FR)
(72) Inventeur: Sauce, Yves, 76710 Eslettes (FR)
(74) Mandataire: Santarelli

(56) Documents cités:
- EP-A- 0 202 103
- EP-A- 0 380 388
- US-A- 4 784 262

## Description

La présente invention concerne d'une manière générale la distribution d'accessoires de câblage à un outil propre à la mise en oeuvre de ceux-ci.

Elle concerne plus particulièrement la distribution de ceux de ces accessoires de câblage qui, comme ceux communément appelés embouts, sont à sertir sur l'extrémité préalablement dénudée de l'âme conductrice de conducteurs électriques en vue de rendre plus aisé et plus sûr leur raccordement à une quelconque borne de connexion.

Plus particulièrement, encore, la présente invention concerne la distribution de tels accessoires de câblage à un outil de sertissage, ou, autrement dit, l'alimentation de ce dernier en de tels accessoires de câblage.

Cet outil de sertissage peut par exemple être du type de celui décrit dans le brevet français qui, déposé le 5 février 1988, sous le No 88 01355, a été publié sous le No 2 626 803.

Il s'agit, en pratique, d'une pince dont l'alimentation en accessoires de câblage se fait à l'aide d'un chargeur rectiligne, c'est-à-dire à l'aide d'un chargeur propre à recevoir un alignement de ces accessoires de câblage, que ceux-ci y soient mis en place sous la forme d'une bande au sein de laquelle ils sont successivement liés les uns aux autres, ou qu'ils y soient mis en place individuellement les uns après les autres.

Cette disposition a donné, et peut encore donner, satisfaction.

Mais, se présentant en pratique sous la forme d'une plaquette globalement parallélépipédique, un chargeur rectiligne a inévitablement une capacité en accessoires de câblage relativement réduite.

On connaît par ailleurs du document US 4,784,262 une boîte selon le préambule de la revendication 1 pour la distribution de pièces telles que des bornes électriques, cette cassette comportant une enveloppe définissant une chambre de stockage. L'enveloppe est formée de deux parties indépendantes comportant chacune un évidement qui peut être employé pour le montage de la cassette sur une machine de sertissage.

La présente invention a d'une manière générale pour objet une disposition permettant d'augmenter de manière notable cette capacité si désirée.

Elle est fondée sur le fait, connu en soi, que, lorsqu'ils sont liés en bande, les accessoires de câblage du genre en cause peuvent être disposés en rouleau au lieu d'être simplement alignés, la bande qu'ils forment présentant par elle-même une souplesse suffisante pour pouvoir être enroulée en spirale.

De manière plus précise, la présente invention a tout d'abord pour objet une boîte distributrice pour accessoires de câblage, notamment pour embouts de câblage, caractérisée en ce qu'elle est formée de deux coquilles, qui sont affrontées l'une à l'autre suivant une surface de joint commune, en étant dûment assujetties l'une à l'autre, et en délimitant conjointement l'une avec l'autre un volume de réception propre au logement des accessoires de câblage à distribuer, et en ce qu'elle comporte, extérieurement, un élément d'emboîtement, tel que nervure en saillie ou rainure en creux, propre à permettre de la rapporter sur un quelconque autre équipement, avec, à distance de cet élément d'emboîtement, une ouverture propre au passage des accessoires de câblage, les deux coquilles étant articulées l'une à l'autre par une zone charnière formant elle-même l'élément d'emboîtement.

Par son élément d'emboîtement, la boîte distributrice suivant l'invention peut par exemple être rapportée sur un chargeur rectiligne, en augmentant ainsi avantageusement la capacité de celui-ci.

II suffit, pour ce faire, que ce chargeur soit équipé d'un élément d'emboîtement complémentaire de son propre élément d'emboîtement.

La présente invention a donc, de ce point de vue, encore pour objet tout chargeur qui, normalement propre à recevoir un simple alignement d'accessoires de câblage, comporte, extérieurement, un tel élément d'emboîtement complémentaire.

Lorsque, par les éléments d'emboîtement ainsi prévus à cet effet, une boîte distributrice suivant l'invention est rapportée sur un tel chargeur rectiligne, il suffit d'introduire dans ce dernier la bande d'accessoires de câblage qu'elle contient, le transfert se faisant en pratique à la faveur de son ouverture et de celle des extrémités, préalablement dégagée, du chargeur qui est opposée à celle où intervient le sertissage.

Préférentiellement, suivant une forme de réalisation particulièrement simple et économique à réaliser, les deux coquilles de la boîte distributrice suivant l'invention sont d'un seul tenant l'une avec l'autre, en étant articulées l'une à l'autre par une zone charnière.

Par exemple, l'ensemble est réalisé par thermoformage.

II est alors tiré profit de la zone charnière ainsi présente entre ces deux coquilles pour former l'élément d'emboîtement permettant de rapporter l'ensemble sur un autre équipement.

Ainsi, la constitution de cet élément d'emboîtement ne nécessite avantageusement par lui-même aucune autre disposition particulière.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une boîte distributrice suivant l'invention, et de la partie extérieure, seule visible, du rouleau d'accessoires de câblage qu'elle contient ;
la figure 2 est, à échelle inférieure, et suivant la flèche II de la figure 1, une vue en élévation de cette boîte distributrice, représentée vide ;
la figure 3 en est, à échelle supérieure, une vue partielle en coupe transversale, suivant la ligne lll-lll de la figure 2 ;
la figure 4 en est, à la même échelle que la figure 3, une vue partielle en coupe longitudinale, suivant la ligne IV-IV de la figure 3 ;
la figure 5 en est, à échelle inférieure, une vue en coupe transversale, suivant la ligne brisée V-V de la figure 2 ;
les figures 6 et 7 en sont des vues partielles en coupe transversale, suivant, chacune respectivement, les lignes VI-VI et VII-VII de la figure 2 ;
la figure 8 est une vue en plan de la boîte distributrice suivant l'invention, représentée ouverte et développée à plat, vue de l'intérieur ;
la figure 9 est une vue en perspective qui, dérivée de celle de la figure 1, illustre la mise en oeuvre de cette boîte distributrice sur un chargeur rectiligne, l'ensemble étant vu de dessus ;
la figure 10 est une autre vue en perspective de cet ensemble, vu de dessous.

Ces figures illustrent, à titre d'exemple, l'application de l'invention au cas où les accessoires de câblage 10 à distribuer sont des embouts de câblage comportant, d'une part, un fût métallique 11, destiné à être engagé, et serti, sur l'extrémité, au préalable dénudée, de l'âme conductrice d'un quelconque conducteur électrique non représenté, et, d'autre part, une collerette en matière isolante 12, destinée, elle, à être engagée sur la gaine de ce conducteur électrique.

Un tel accessoire de câblage étant bien connu par lui-même, et ne relevant pas, en soi, de la présente invention, il ne sera pas décrit plus en détail ici.

Il suffira d'indiquer que, dans la forme de mise en oeuvre représentée, les accessoires de câblage 10 à distribuer forment une bande 13, continue, au sein de laquelle ils sont successivement articulés les uns aux autres de manière détachable, et qui, par elle-même, est suffisamment souple pour pouvoir être enroulée en spirale, à la manière d'un rouleau.

Suivant l'invention, pour le logement, et la reprise, d'accessoires de câblage 10 formant ainsi un rouleau, il est mis en oeuvre une boîte distributrice 14.

Suivant l'invention, également, cette boîte distributrice 14 est globalement formée de deux coquilles 14A, 14B, qui sont affrontées l'une à l'autre suivant une surface de joint S commune à l'une et à l'autre d'entre elles, en étant dûment assujetties l'une à l'autre suivant des dispositions décrites plus en détail ultérieurement, et en délimitant conjointement l'une avec l'autre un volume de réception V propre au logement des accessoires de câblage 10 à distribuer, et, suivant des dispositions également décrites plus en détail ultérieurement, elle comporte, extérieurement, un élément d'emboîtement 16, tel que nervure en saillie ou rainure en creux, propre à permettre de la rapporter sur un quelconque autre équipement, avec, à distance de cet élément d'emboîtement 16, une ouverture 17 propre au passage des accessoires de câblage 10.

Préférentiellement, et cela est le cas dans la forme de réalisation représentée, les deux coquilles 14A, 14B sont articulées l'une à l'autre par une zone charnière Z, et celle-ci forme par elle-même l'élément d'emboîtement 16.

Le volume de réception V formé par les deux coquilles 14A, 14B est globalement cylindrique.

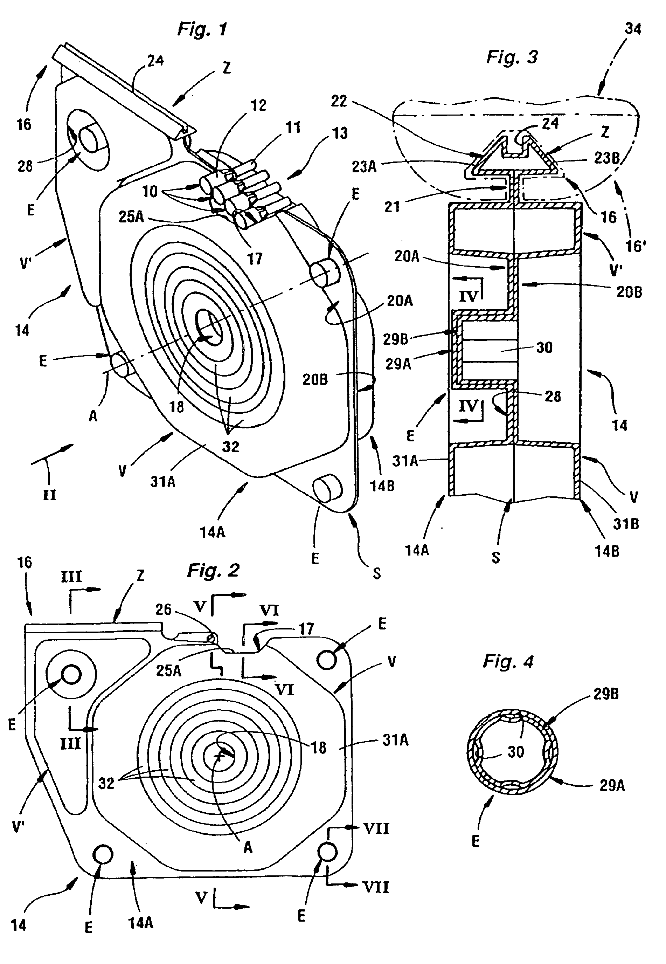

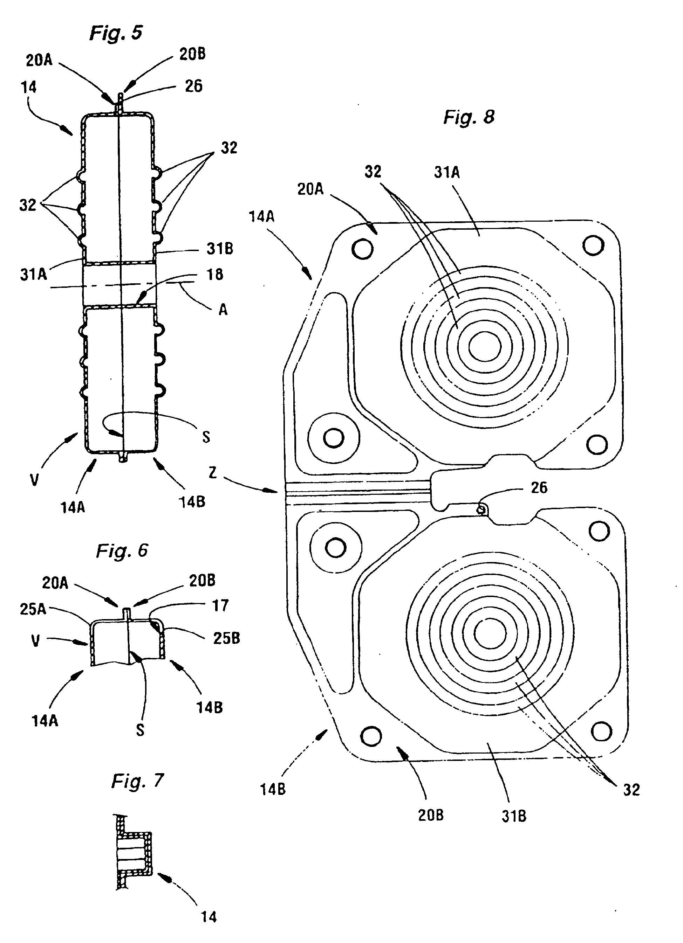

Soit A son axe, tel que schématisé en traits interrompus sur les figures 1 et 5, et tel que repéré par sa trace sur la figure 2.

Dans la forme de réalisation représentée, ce volume de réception V s'étend de manière annulaire autour d'un trou central 18 propre à permettre le passage d'une broche lors de son remplissage en accessoires de câblage 10.

Par exemple, et tel que représenté, la périphérie externe de ce volume de réception V a un contour globalement octogonal, et sa périphérie interne a un contour globalement circulaire.

Dans la forme de réalisation représentée, le trou central 18 est chemisé pour moitié par chacune des coquilles 14A, 14B.

Mais, en variante, il pourrait tout aussi bien n'être chemisé que par l'une de ces coquilles 14A, 14B, ou être nu.

Dans la forme de réalisation représentée, les deux coquilles 14A, 14B forment, chacune respectivement, autour du volume de réception V, sur une partie au moins du pourtour de celui-ci, deux flasques 20A, 20B, qui s'étendent sensiblement perpendiculairement à l'axe A de ce volume de réception V, et qui, jointifs l'un avec l'autre, définissent la surface de joint S de ces deux coquilles 14A, 14B, en sorte que cette surface de joint S est plane.

L'élément d'emboîtement 16 s'étend longitudinalement le long d'un des bords des flasques 20A, 20B des deux coquilles 14A, 14B, à l'écart du volume de réception V, et sensiblement orthogonalement par rapport à l'axe A de celui-ci.

En pratique, cet élément d'emboîtement 16 s'étend de part et d'autre de la surface de joint S des deux coquilles 14A, 14B, en se répartissant pour moitié sur chacune de celles-ci.

Dans la forme de réalisation représentée, l'élément d'emboitement 16 forme une nervure en saillie, et, présentant un jambage 21 et une tête 22, il a, transversalement, un profil hors tout en T.

En pratique, le jambage 21 de cet élément d'emboîtement 16 se réduit à une portion des flasques 20A, 20B des deux coquilles 14A, 14B.

Préférentiellement, et cela est le cas dans la forme de réalisation représentée, les flancs longitudinaux 23A, 23B de la tête 22 de l'élément d'emboîtement 16 sont obliques l'un par rapport à l'autre, en se rapprochant l'un de l'autre au fur et à mesure qu'ils s'éloignent du jambage 21 de cet élément d'emboîtement 16.

Plus précisément, dans la forme de réalisation représentée, la tête 22 de l'élément d'emboîtement 16 a, transversalement, un profil hors tout globalement trapézoïdal.

En outre, dans cette forme de réalisation, elle présente, longitudinalement, suivant la petite base de son profil, une rainure 24.

Dans la forme de réalisation représentée, l'ouverture 17 de la boîte distributrice 14 intervient sur la tranche du volume de réception V, à la périphérie externe de celui-ci.

En pratique, cette ouverture 17 s'étend au voisinage immédiat de l'élément d'emboîtement 16, et, comme celui-ci, elle se répartit pour moitié sur chacune des deux coquilles 14A, 14B.

En pratique, cette ouverture 17 résulte d'échancrures 25A, 25B affectant chacune respectivement localement les coquilles 14A, 14B en s'étendant de manière symétrique sur l'une et sur l'autre de celles-ci.

Préférentiellement, et cela est le cas dans la forme de réalisation représentée, le flasque 20A, 20B de l'une au moins des deux coquilles 14A, 14B présente, en bordure de l'ouverture 17, un perçage 26 propre à l'engagement d'un accessoire de câblage 10 par le fût métallique 11 de celui-ci.

Par exemple, et tel que représenté, il n'en est ainsi que pour le flasque 20B de la seule coquille 14B, le flasque 20A de la coquille 14A étant corollairement tronqué au droit de ce perçage 26 pour laisser un libre accès à celui-ci.

En pratique, le perçage 26 s'étend à un niveau intermédiaire entre celui de l'élément d'emboîtement 16 et celui de l'ouverture 17.

Dans la forme de réalisation représentée, les deux coquilles 14A, 14B sont assujetties l'une à l'autre par des zones d'emboîtement E qui interviennent de place en place autour du volume de réception V.

Par exemple, et tel que représenté, quatre zones d'emboîtement E sont ainsi prévues, en rectangle, autour du volume de réception V.

L'une d'elles s'étend à l'aplomb de l'élément d'emboîtement 16.

Elle intervient, en pratique, au sein d'un puits 28 délimité par un volume de rigidification V', qui, formé à cet endroit par les deux coquilles 14A, 14B pour le raidissement local de l'ensemble, longe localement le volume de réception V.

Les autres zones d'emboîtement E interviennent, elles, isolément, en pleine surface des flasques 20A, 20B.

Dans la forme de réalisation représentée, chacune des zones d'emboîtement E est formée par deux bossages 29A, 29B, qui appartiennent, chacun respectivement, aux flasques 20A, 20B des deux coquilles 14A, 14B, en faisant saillie dans un même sens sur ces flasques 20A, 20B, et qui, complémentaires l'un de l'autre, sont emboîtés l'un dans l'autre.

En pratique, le bossage 29A, 29B le plus interne, en l'espèce le bossage 29B appartenant à la coquille 14B, comporte, périphériquement, de place en place, en creux sur sa surface extérieure, le long de ses génératrices, des rainures 30, pour faciliter son emboîtement dans le bossage 29A, 29B le plus externe, en l'espèce le bossage 29A appartenant à la coquille 14A.

Par exemple, et tel que représenté, quatre rainures 30 sont ainsi prévues en croix sur le bossage 29B le plus interne.

Préférentiellement, pour garantir l'inviolabilité de la boîte distributrice 14 suivant l'invention, les deux coquilles 14A, 14B sont solidarisées l'une à l'autre au droit de l'une au moins de leurs zones d'emboîtement E, et, en pratique, au droit de chacune de celles-ci, par exemple par collage ou soudage.

Préférentiellement, également, pour la rigidification du volume de réception V, les faces frontales 31A, 31B de ce volume de réception V sont chacune affectées, localement, de nervures 32, qui, concentriques les unes avec les autres, et coaxiales du trou central 18, s'étendent annulairement autour de celui-ci.

Préférentiellement, enfin, les deux coquilles 14A, 14B sont d'un seul tenant l'une avec l'autre, en formant une seule et même pièce avec leur zone charnière Z, et, donc, avec l'élément d'emboîtement 16.

Par exemple, la boîte distributrice 14 ainsi constituée est réalisée, à plat, par thermoformage, tel que représenté à la figure 8.

Au montage, une bande 13 d'accessoires de câblage 10 est disposée en rouleau dans la partie du volume de réception V délimitée par l'une des coquilles 14A, 14B, en étant en pratique enroulée en spirale autour du trou central de celle-ci, et l'autre des coquilles 14A, 14B est ensuite rabattue sur la précédente, par pivotement autour de la zone charnière Z, jusqu'à fermeture de l'ensemble.

Au terme de cette fermeture, les deux coquilles 14A, 14B sont en prise l'une avec l'autre par leurs zones d'emboîtement E, l'assujettissement correspondant étant éventuellement conforté par une solidarisation, tel qu'évoqué ci-dessus.

L'accessoire de câblage 10 le plus extrême, extérieurement, sur la bande 13, est engagé, par son fût métallique 11, dans le perçage 26 prévu à cet effet en bordure de l'ouverture 17, tel que représenté sur la figure 1.

Si désiré, pour conforter le maintien de la bande 13 d'accessoires de câblage 10 par rapport à la boîte distributrice 14, un tronçon de ruban adhésif, non représenté, est rapporté à cheval sur cette boîte distributrice 14, au droit de son ouverture 17, en contournant, au passage, la partie extérieure de cette bande 13.

La boîte distributrice 14 suivant l'invention est alors prête à l'emploi.

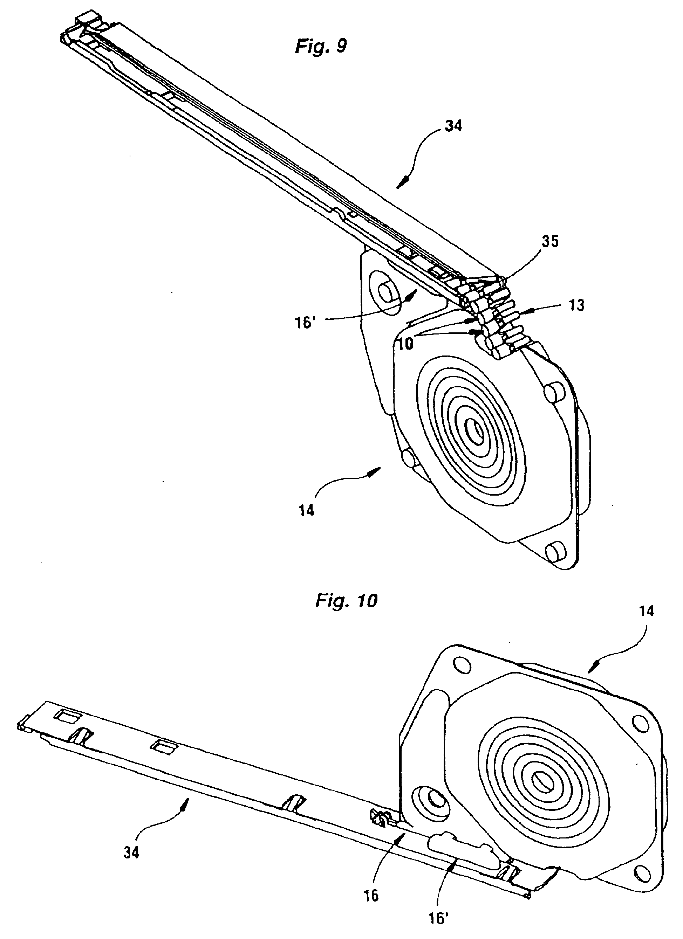

Par exemple, et tel que représenté sur les figures 9 et 10, elle est rapportée, pour ce faire, par son élément d'emboîtement 16, sur un chargeur 34, qui n'est normalement propre qu'à recevoir un alignement d'accessoires de câblage 10.

Ce chargeur 34, qui est donc globalement rectiligne, peut, par exemple, être du type de celui décrit dans le brevet français qui, déposé le 5 février 1998, sous le No 88 01356, corollairement au brevet français No 88 01355 déjà mentionné ci-dessus, a été publié sous le No 2 626 804.

Pour être ainsi équipé d'une boîte distributrice 14, ce chargeur 34 comporte, alors, extérieurement, un élément d'emboîtement 16' complémentaire de l'élément d'emboîtement 16 de cette boîte distributrice 14.

Dans la forme de réalisation représentée, cet élément d'emboîtement 16' forme, en pratique, une rainure en creux, qui, transversalement, a un profil hors tout en T analogue à celui de la rainure formée en saillie par l'élément d'emboîtement 16 de la boîte distributrice 14.

Quoi qu'il en soit, l'élément d'emboîtement 16' intervient à proximité de l'une des extrémités du chargeur 34, en l'espèce l'extrémité 35 de celui-ci opposée à celle où se fait le sertissage des accessoires de câblage 10, et cette extrémité 35 du chargeur 34 est dégagée, pour y permettre l'introduction de la bande 13 d'accessoires de câblage 10 extraite de la boîte distributrice 14.

Bien entendu, la présente invention ne se limite pas à la forme de réalisation décrite et représentée, mais englobe toute variante d'exécution.

En particulier, au lieu d'être une nervure en saillie, l'élément d'emboîtement de la boîte distributrice suivant l'invention peut tout aussi bien être une rainure en creux, l'élément d'emboîtement complémentaire de l'équipement sur lequel cette boîte distributrice doit être rapportée formant alors une nervure en saillie au lieu de former une rainure en creux.

En outre, cet équipement n'est pas nécessairement un chargeur rectiligne.

En effet, il pourrait par exemple tout aussi bien s'agir directement de l'outil de sertissage mis en oeuvre.

## Revendications

1. Boîte distributrice pour accessoires de câblage, notamment pour embouts de câblage, étant formée de deux coquilles (14A, 14B), qui sont affrontées l'une à l'autre suivant une surface de joint (S) commune, en étant dûment assujetties l'une à l'autre, et en délimitant conjointement l'une avec l'autre un volume de réception (V) propre au logement des accessoires de câblage (10) à distribuer, et en ce qu'elle comporte, extérieurement, un élément d'emboîtement (16), tel que nervure en saillie ou rainure en creux, propre à permettre de la rapporter sur un quelconque autre équipement, avec, à distance de cet élément d'emboîtement (16), une ouverture (17) propre au passage des accessoires de câblage (10), **caractérisée en ce qu'**elle les deux coquilles (14A, 14B) sont articulées l'une à l'autre par une zone charnière (Z) formant par elle-même l'élément d'emboîtement (16).

2. Boîte distributrice suivant la revendication 1, **caractérisée en ce que** les deux coquilles (14A, 14B) forment, chacune respectivement, autour du volume de réception (V), sur une partie au moins du pourtour de celui-ci, deux flasques (20A, 20B), qui, jointifs l'un avec l'autre, définissent la surface de joint (S) de ces deux coquilles (14A, 14B), en sorte que cette surface de joint (S) est plane.

3. Boîte distributrice suivant l'une quelconque des revendications 1 et 2, **caractérisée en ce que** l'élément d'emboîtement (16) forme une nervure en saillie, et, présentant un jambage (21) et une tête (22), il a, transversalement, un profil hors tout en T.

4. Boîte distributrice suivant les revendications 2 et 3, prises conjointement, **caractérisée en ce que** le jambage (21) de l'élément d'emboîtement (16) se réduit à une portion des flasques (20A, 20B) des deux coquilles (14A, 14B).

5. Boîte distributrice suivant l'une quelconque des revendications 3 et 4, **caractérisée en ce que** les flancs longitudinaux (23A, 23B) de la tête (22) de l'élément d'emboîtement (16) sont obliques l'un par rapport à l'autre, en se rapprochant l'un de l'autre au fur et à mesure qu'ils s'éloignent du jambage (21) de cet élément d'emboîtement (16).

6. Boîte distributrice suivant la revendication 5, **caractérisée en ce que** la tête (22) de l'élément d'emboîtement (16) a, transversalement, un profil hors tout globalement trapézoïdal.

7. Boîte distributrice suivant la revendication 6, **caractérisée en ce que** la tête (22) de l'élément d'emboîtement (16) présente, longitudinalement, suivant la petite base de son profil, une rainure (24).

8. Boîte distributrice suivant la revendication 2, **caractérisée en ce que** l'élément d'emboîtement (16) s'étend longitudinalement le long d'un des bords des flasques (20A, 20B) des deux coquilles (14A, 14B).

9. Boîte distributrice suivant l'une quelconque des revendications 1 à 8, **caractérisée en ce que** l'élément d'emboîtement (16) s'étend de part et d'autre de la surface de joint (S) des deux coquilles (14A, 14B).

10. Boîte distributrice suivant l'une quelconque des revendications 1 à 9, **caractérisée en ce que** le volume de réception (V) est globalement cylindrique.

11. Boîte distributrice suivant la revendication 10, **caractérisée en ce que** le volume de réception (V) s'étend de manière annulaire autour d'un trou central (18).

12. Boîte distributrice suivant l'une quelconque des revendications 10 et 11, **caractérisée en ce que** l'ouverture (17) intervient sur la tranche du volume de réception (V).

13. Boîte distributrice suivant l'une quelconque des revendications 1 à 12, **caractérisée en ce que** l'ouverture (17) s'étend au voisinage immédiat de l'élément d'emboîtement (16), et se répartit pour moitié sur chacune des deux coquilles (14A, 14B).

14. Boîte distributrice suivant les revendications 2 et 13, prises conjointement, **caractérisée en ce que** le flasque (20A, 20B) de l'une au moins des deux coquilles (14A, 14B) présente, en bordure de l'ouverture (17), un perçage (26).

15. Boîte distributrice suivant l'une quelconque des revendications 1 à 14, **caractérisée en ce que** les deux coquilles (14A, 14B) sont assujetties l'une à l'autre par des zones d'emboîtement (E) qui interviennent de place en place autour du volume de réception (V).

16. Boîte distributrice suivant les revendications 2 et 15, prises conjointement, **caractérisée en ce que** chacune des zones d'emboîtement (E) est formée par deux bossages (29A, 29B), qui appartiennent, chacun respectivement, aux flasques (20A, 20B) des deux coquilles (14A, 14B), et qui, complémentaires l'un de l'autre, sont emboîtés l'un dans l'autre.

17. Boîte distributrice suivant la revendication 16, **caractérisée en ce que** le bossage (29B) le plus interne comporte, périphériquement, de place en place, en creux sur sa surface extérieure, le long de ses génératrices, des rainures (30), pour faciliter son emboîtement dans le bossage (29A) le plus externe.

18. Boîte distributrice suivant l'une quelconque des revendications 15 à 17, **caractérisée en ce que** les deux coquilles (14A, 14B) sont solidarisées l'une à l'autre au droit de l'une au moins de leurs zones d'emboîtement (E), par exemple par collage ou soudage.

19. Boîte distributrice suivant l'une quelconque des revendications 1 à 18, **caractérisée en ce que** les deux coquilles (14A, 14B) sont d'un seul tenant l'une avec l'autre, en formant une seule et même pièce avec l'élément d'emboîtement (16).

20. Boîte distributrice suivant la revendication 19, **caractérisée en ce qu'**elle est réalisée par thermoformage.

21. Boîte distributrice suivant l'une quelconque des revendications 1 à 20, **caractérisée en ce que**, par son élément d'emboîtement (16), elle est rapportée sur un chargeur (34), qui n'est normalement propre qu'à recevoir un alignement d'accessoires de câblage (10), et qui comporte, extérieurement, un élément d'emboîtement (16') complémentaire.

22. Ensemble comportant une boîte distributrice (14) conforme à l'une quelconque des revendications 1 à 21 et un chargeur propre à recevoir un alignement d'accessoires de câblage (10), comportant, extérieurement, un élément d'emboîtement (16') complémentaire de l'élément d'emboîtement (16) de cette boîte distributrice (14).

23. Ensemble suivant la revendication 22, **caractérisé en ce que** l'élément d'emboîtement (16') dudit chargeur intervient à proximité de l'une de ses extrémités et celle-ci est dégagée.

## Patentansprüche

1. Abgabetrommel für Kabelzubehörteile, insbesondere für Kabelendhülsen, bestehend aus zwei Schalen (14A, 14B), die längs einer gemeinsamen Verbindungsfläche (S) aneinandergesetzt sind, indem sie in geeigneter Weise aneinander befestigt sind und zusammen miteinander ein Aufnahmevolumen (V) für die Aufnahme der abzugebenden Kabelzubehörteile (10) bilden, und dass sie außen ein Steckelement (16), wie eine vorstehende Rippe oder ausgesparte Nut, aufweist, das geeignet ist, ihre Anbringung an einer beliebigen anderen Einrichtung zu gestatten, und zwar mit, in einem Abstand von diesem Steckelement (16), einer Öffnung (17) für den Durchgang der Kabelzubehörteile (10), **dadurch gekennzeichnet, dass** die beiden Schalen (14A, 14B) durch eine Scharnierzone (Z) aneinander angelenkt sind, die durch sich selbst das Steckelement (16) bildet.

2. Abgabetrommel nach Anspruch 1, **dadurch gekennzeichnet, dass** die beiden Schalen (14A, 14B) jeweils um das Aufnahmevolumen (V) herum auf mindestens einem Teil dessen Umfangs zwei Flansche (20A, 20B) bilden, die aneinander anliegen und die Verbindungsfläche (S) dieser beiden Schalen (14A, 14B) definieren, so dass diese Verbindungsfläche (S) eben ist.

3. Abgabetrommel nach einem der Ansprüche 1 und 2, **dadurch gekennzeichnet, dass** das Steckelement (16) eine vorstehende Rippe bildet, einen Fuß (21) und einen Kopf (22) aufweist und in Querrichtung ein T-förmiges Außenprofil besitzt.

4. Abgabetrommel nach den Ansprüche 2 und 3 zusammen, **dadurch gekennzeichnet, dass** der Fuß (21) des Steckelements (16) auf einen Abschnitt der Flansche (20A, 20B) der beiden Schalen (14A, 14B) reduziert ist.

5. Abgabetrommel nach einem der Ansprüche 3 und 4, **dadurch gekennzeichnet, dass** die Längsflanken (23A, 23B) des Kopfs (22) des Steckelements (16) zueinander schräg sind, indem sie sich mit zunehmender Entfernung von dem Fuß (21) dieses Steckelements (16) einander nähern.

6. Abgabetrommel nach Anspruch 5, **dadurch gekennzeichnet, dass** der Kopf (22) des Steckelements (16) in Querrichtung ein insgesamt trapezförmiges Außenprofil hat.

7. Abgabetrommel nach Anspruch 6, **dadurch gekennzeichnet, dass** der Kopf (22) des Steckelements (16) in Längsrichtung längs der kleinen Grundfläche seines Profils eine Nut (24) aufweist.

8. Abgabetrommel nach Anspruch 2, **dadurch gekennzeichnet, dass** das Steckelement (16) sich in Längsrichtung längs eines der Ränder der Flansche (20A, 20B) der beiden Schalen (14A, 14B) erstreckt.

9. Abgabetrommel nach einem der Ansprüche 1 bis 8, **dadurch gekennzeichnet, dass** das Steckelement (16) sich zu beiden Seiten der Verbindungsfläche (S) der beiden Schalen (14A, 14B) erstreckt.

10. Abgabetrommel nach einem der Ansprüche 1 bis 9, **dadurch gekennzeichnet, dass** das Aufnahmevolumen (V) insgesamt zylindrisch ist.

11. Abgabetrommel nach Anspruch 10, **dadurch gekennzeichnet, dass** das Aufnahmevolumen (V) sich um ein zentrales Loch (18) herum ringförmig erstreckt.

12. Abgabetrommel nach einem der Ansprüche 10 und 11, **dadurch gekennzeichnet, dass** die Öffnung (17) auf der Schmalkante des Aufnahmevolumens (V) vorgesehen ist.

13. Abgabetrommel nach einem der Ansprüche 1 bis 12, **dadurch gekennzeichnet, dass** die Öffnung (17) sich in unmittelbarer Nähe des Steckelements (16) erstreckt und sich jeweils zur Hälfte auf jede der beiden Schalen (14A, 14B) erstreckt.

14. Abgabetrommel nach den Ansprüchen 2 und 13 zusammen, **dadurch gekennzeichnet, dass** der Flansch (20A, 20B) mindestens einer der beiden Schalen (14A, 14B) am Rand der Öffnung (17) eine Bohrung (26) aufweist.

15. Abgabetrommel nach einem der Ansprüche 1 bis 14, **dadurch gekennzeichnet, dass** die beiden Schalen (14A, 14B) mit Steckbereichen (E) aneinander befestigt sind, die von Platz zu Platz um das Aufnahmevolumen (V) herum angeordnet sind.

16. Abgabetrommel nach den Ansprüche 2 und 15 zusammen, **dadurch gekennzeichnet, dass** jeder der Steckbereiche (E) von zwei jeweilig zu den Flanschen (20A, 20B) der beiden Schalen (14A, 14B) gehörenden Buckeln (29A, 29B) gebildet ist, die zueinander komplementär sind und ineinander gesteckt sind.

17. Abgabetrommel nach Ansspruch 16, **dadurch gekennzeichnet, dass** der innere Buckel (29B) umfangsmäßig von Platz zu Platz auf seiner Außenseite vertieft längs seiner Erzeugenden Nuten (30) aufweist, um sein Einstecken in den äußeren Buckel (29A) zu erleichtern.

18. Abgabetrommel nach einem der Ansprüche 15 bis 17, **dadurch gekennzeichnet, dass** die beiden Schalen (14A, 14B) auf Höhe mindestens ihrer Steckbereiche (E) beispielsweise durch Verkleben oder Verschweißen miteinander fest verbunden sind.

19. Abgabetrommel nach einem der Ansprüche 1 bis 18, **dadurch gekennzeichnet, dass** die beiden Schalen (14A, 14B) miteinander einstückig ausgeführt sind, indem sie mit dem Steckelement (16) ein und dasselbe Teil bilden.

20. Abgabetrommel nach Anspruch 19, **dadurch gekennzeichnet, dass** sie durch Warmformung hergestellt ist.

21. Abgabetrommel nach einem der Ansprüche 1 bis 20, **dadurch gekennzeichnet, dass** sie durch ihr Steckelement (16) an einem Lader (34) angebracht ist, der normalerweise nur geeignet ist, eine Aneinanderreihung von Kabelzubehörteilen (10) aufzunehmen, und der außen ein ergänzendes Steckelement (16') aufweist.

22. Einheit, umfassend eine Abgabetrommel nach einem der Ansprüche 1 bis 21 und einen Lader zur Aufnahme einer Aneinanderreihung von Kabelzubehörteilen (10), der außen ein Steckelement (16') umfasst, das zu dem Steckelement (16) dieser Abgabetrommel (14) ergänzend ist.

23. Einheit nach Anspruch 22, **dadurch gekennzeichnet, dass** das Steckelement (16') des Laders in Nähe eines seiner Enden angeordnet ist und dieses freigestellt ist.

## Claims

1. Dispenser box for cabling accessories, particularly for cable terminations, being formed by two shells (14A, 14B), which are brought face-to-face along a common joint surface (S), being duly fastened to one another, and jointly delimiting with each other an accommodation volume (V) suitable for housing the cabling accessories (10) to be dispensed, and in that it includes, externally, a docking element (16), such as a projecting rib or recessed groove, suitable for allowing it to be affixed to any other piece of equipment, with, at a distance from this docking element (16), an aperture (17) suitable for the cabling accessories (10) to pass, **characterised in that** the two shells (14A, 14B) are articulated on each other by means of a hinge area (Z) forming by itself the docking element (16).

2. Dispenser box according to Claim 1, **characterised in that** two shells (14A, 14B) each respectively form, around the accommodation volume (V), over at least a part of the periphery thereof, two flanges (20A, 20B) which, contiguous with each other, define the joint surface (S) of these two shells (14A, 14B), so that this joint surface (S) is flat.

3. Dispenser box according to either one of Claims 1 and 2, **characterised in that** the docking element (16) forms a projecting rib and, exhibiting a shank (21) and a head (22), it has, transversely, an overall T-shaped profile.

4. Dispenser box according to Claims 2 and 3 taken conjointly, **characterised in that** the shank (21) of the docking element (16) is no more than a portion of the flanges (20A, 20B) of the two shells (14A, 14B).

5. Dispenser box according to either of Claims 3 and 4, **characterised in that** the longitudinal flanks (23A, 23B) of the head (22) of the docking element (16) are oblique with respect to each other, approaching each other in proportion to their distance from the shank (21) of this docking element (16).

6. Dispenser box according to Claim 5, **characterised in that** the head (22) of the docking element (16) has, transversely, a roughly trapezoidal overall profile.

7. Dispenser box according to Claim 6, **characterised in that** the head (22) of the docking element (16) exhibits a groove (24) longitudinally along the small base of its profile.

8. Dispenser box according to Claim 2, **characterised in that** the docking element (16) extends longitudinally along one of the edges of the flanges (20A, 20B) of the two shells (14A, 14B).

9. Dispenser box according to any one of Claims 1 to 8, **characterised in that** the docking element (16) extends on either side of the joint surface (S) of the two shells (14A, 14B).

10. Dispenser box according to any one of Claims 1 to 9, **characterised in that** the accommodation volume (V) is roughly cylindrical.

11. Dispenser box according to Claim 10, **characterised in that** the accommodation volume (V) extends in annular fashion around a central hole (18).

12. Dispenser box according to either one of Claims 10 and 11, **characterised in that** the aperture (17) occurs in the edge of the accommodation volume (V).

13. Dispenser box according to any one of Claims 1 to 12, **characterised in that** the aperture (17) extends in the immediate vicinity of the docking element (16), and is distributed half on each of the two shells (14A, 14B).

14. Dispenser box according to Claims 2 and 13 taken conjointly, **characterised in that** the flange (20A, 20B) of at least one of the two shells (14A, 14B) exhibits, at the border of the aperture (17), a piercing (26).

15. Dispenser box according to any one of Claims 1 to 14, **characterised in that** the two shells (14A, 14B) are fastened to one another by interlocking areas (E) which occur from place to place around the accommodation volume (V) .

16. Dispenser box according to Claims 2 and 15 taken conjointly, **characterised in that** each of the interlocking areas (E) is formed by two protrusions (29A, 29B) which each respectively belong to the flanges (20A, 20B) of the two shells (14A, 14B) and which, complementary to each other, are interlocked into one another.

17. Dispenser box according to Claim 16, **characterised in that** the innermost protrusion (29B) has, peripherally, from place to place, recessed over its outer surface, along its generatrices, grooves (30) in order to facilitate its interlocking into the outermost protrusion (29A) .

18. Dispenser box according to any one of Claims 15 to 17, **characterised in that** the two shells (14A, 14B) are secured to each other in line with at least one of their interlocking areas (E), for example by bonding or welding.

19. Dispenser box according to any one of Claims 1 to 18, **characterised in that** the two shells (14A, 14B) are of a single piece with one another, forming one and the same piece with the docking element (16).

20. Dispenser box according to Claim 19, **characterised in that** it is produced by thermoforming.

21. Dispenser box according to any one of Claims 1 to 20, **characterised in that**, via its docking element (16), it is affixed to a loader (34), which is normally suitable only for receiving a linear arrangement of cabling accessories (10) and which includes, externally, a complementary docking element (16').

22. Assembly comprising a dispenser box (14) according to any one of claims 1 to 21 and a loader suitable for receiving a linear arrangement of cabling accessories (10), comprising, externally, a docking element (16') complementary to the docking element (16) of this dispenser box (14).

23. Assembly according to Claim 22, **characterised in that** the docking element (16') of the said loader is present in proximity to one of its ends and the latter is left clear.
